# FASCICULE DE BREVET EUROPEEN

(11) **EP 2 534 944 B1**
(45) Date de publication et mention de la délivrance du brevet: **05.12.2018**
(21) Numéro de dépôt: 12305669.9
(22) Date de dépôt: 13.06.2012
(51) Int. Cl.: A01K 7/00

(54) **Cuve pour un abreuvoir collectif**
Becken für eine kollektive Tränke
Tank for a collective drinking trough

(30) Priorité: 14.06.2011 FR 1155172
(43) Date de publication de la demande: 19.12.2012
(73) Titulaire: La Buvette, 08090 Tournes (FR)
(72) Inventeur: Bousquet, Jean-Philippe, 51480 Belval-sous-Chatillon (FR)
(74) Mandataire: Rhein, Alain

(56) Documents cités:
- EP-A1- 1 992 222
- US-A- 150 423
- US-A- 5 105 769
- US-A- 5 809 934
- US-B1- 6 363 885
- US-B1- 7 634 973

## Description

La présente invention concerne le domaine des abreuvoirs destinés aux animaux d'élevage.

La présente invention trouvera son application principalement dans le domaine de l'agriculture et de l'élevage.

L'invention concerne plus particulièrement une cuve d'abreuvoir. Une telle cuve peut servir aussi bien à un abreuvoir monoposte qu'à un abreuvoir collectif, c'est-à-dire destinée à une utilisation simultanée par plusieurs animaux.

Traditionnellement, les animaux d'élevage, qu'ils soient dans un local, un enclos ou un pré, sont abreuvés par l'intermédiaire d'un abreuvoir d'une capacité et d'une forme adaptées en fonction du type et du nombre d'animaux. De tels abreuvoirs comprennent généralement un fond surmonté de parois latérales et de parois avant et arrière, qui définissent une enceinte, ou une cuve, dans laquelle est acheminée de l'eau potable. Pour ce faire, ledit abreuvoir peut être relié à un réseau d'approvisionnement en eau par l'intermédiaire d'une robinetterie. Généralement, les abreuvoirs traditionnels comprennent également un rebord extérieur qui permet d'une part de rigidifier la cuve et de la fixer sur un support destiné à être posé sur le sol. L'abreuvoir peut également être fixé à un mur, à des poteaux, ou encore à la barrière d'un enclos.

Cependant, ce type d'abreuvoir présente l'inconvénient majeur de laisser déborder l'eau lorsque les animaux lapent celle-ci, ce qui peut entrainer des pertes considérables, d'autant plus que les cuves d'abreuvoir présentent généralement une forme évasée au niveau de leur partie supérieure.

On connaît encore des abreuvoirs destinés à une utilisation simultanée par plusieurs animaux et dont la cuve présente un rebord refoulé anti-gaspillage permettant d'éviter les pertes d'eau et les éclaboussures. Un tel rebord est obtenu par un premier pliage du matériau de la cuve selon une direction horizontale puis un second pliage selon une direction verticale de manière à former un « U » inversé dirigé vers l'intérieur de la cuve.

Une telle cuve, et en particulier son rebord, présente l'inconvénient de ne pas pouvoir se fixer sur un support fixe, par exemple en polyéthylène. De plus, ledit rebord anti-gaspillage présente une forme telle que le nettoyage de celui-ci est très difficile, notamment lorsque la vidange de la cuve s'effectue par basculement.

Il est également connu de l'état de la technique de réaliser des abreuvoirs mono-accès ou monoposte destinés aux animaux d'élevage. De tels abreuvoirs comportent une embase sur laquelle est fixé un bol ou une cuve, par exemple fabriqués en acier inoxydable, ceux-ci étant destinés à être remplis d'eau. Généralement, une telle cuve présente un rebord extérieur.

Par-dessus ladite cuve, et plus particulièrement sur le rebord extérieur, il est possible de rapporter, par l'intermédiaire de vis ou de boulons, un cadre anti-gaspillage. Généralement, ce dernier présente sensiblement une forme et une circonférence identique au pourtour supérieur du bol ou de la cuve et une épaisseur plus importante par rapport à celle de la paroi supérieure de la cuve. De ce fait, le cadre va dépasser à l'intérieur par rapport à la paroi de ladite cuve. Un tel cadre anti-gaspillage permet donc, de par sa structure, présentant un débordement sensiblement horizontal dirigé vers le centre de la cuve, d'éviter des pertes de liquide lorsque les animaux lapent l'eau à la surface.

Cependant, un tel dispositif d'abreuvoir présente plusieurs inconvénients ; d'une part, le cadre anti-gaspillage est rapporté sur la cuve de l'abreuvoir par l'intermédiaire d'organes d'assemblage, tels que des vis ou des boulons. Ces derniers, bien que permettant la fixation du cadre sur la cuve, ne sont pas très résistants face aux à-coups que peuvent donner les animaux lorsqu'ils s'abreuvent. De ce fait, l'ensemble de la structure peut s'avérer fragilisée. Un autre inconvénient réside dans le fait que le rebord sensiblement horizontal peut gêner la vidange de la cuve, notamment pour les abreuvoirs dont la vidange s'effectue par basculement de ladite cuve ; en effet, de la nourriture, tombée dans l'eau lorsque les animaux s'abreuvent, peut rester coincée entre ledit rebord et les parois internes de la cuve.

Des cuves connues sont décrites dans les documents US6363885B, US150423A, EP1992222A1, US5809934A, US7634973B1 et US5105769A.

L'invention offre la possibilité de pallier, au moins en partie, les divers inconvénients de l'état de la technique en proposant une cuve d'abreuvoir collectif ou monoposte qui présente une structure permettant d'une part d'éviter les pertes d'eau, d'autre part de faciliter la vidange de ladite cuve, tout en permettant une rigidification et une fixation à un support d'abreuvoir.

A cet effet, la présente invention concerne une cuve monobloc pour un abreuvoir, selon la revendication 1.

Selon d'autres caractéristiques :
- le moyen de fixation peut comporter en outre un retour extérieur,
- ledit retour extérieur peut présenter une inclinaison selon un angle compris entre 30° et 90° par rapport au plan de ladite face horizontale. Préférentiellement, l'inclinaison du retour extérieur peut être comprise entre 45° et 75°,
- l'angle d'inclinaison du moyen anti-gaspillage par rapport à la verticale peut être compris entre 30° et 85°, préférentiellement entre 45° et 75°.

L'invention concerne aussi l'utilisation d'une cuve monobloc selon l'invention, pour fabriquer un abreuvoir collectif.

L'invention peut également concerner l'utilisation d'une telle cuve pour la fabrication d'un abreuvoir monoposte.

L'invention concerne également un abreuvoir, de type abreuvoir à basculement, incorporant une cuve monobloc selon l'invention.

Enfin, l'invention est encore relative à un abreuvoir, de type abreuvoir à embase, incorporant une cuve monobloc selon l'invention.

La présente invention présente de nombreux avantages. D'une part la cuve est monobloc puisque le rebord constitue un prolongement de la cuve et en particulier des parois latérales. De ce fait, elle ne nécessite pas, pour son montage, l'utilisation de vis ou de boulon et est fabriquée en une seule pièce qui peut directement être montée par exemple sur une embase adaptée. La cuve selon l'invention est donc plus solide et présente une durée de vie plus longue que les cuves déjà existantes. De plus, une telle cuve est très facile à mettre en oeuvre puisque le rebord est formé au moment du pliage de la cuve, ce qui supprime l'étape de montage en usine destinée à monter un cadre anti-gaspillage. Les parois en bout de cuve seront préférentiellement rapportées par soudage, pour éviter là encore les vis ou boulons.

D'autre part, la configuration de la cuve, et notamment la présence du moyen anti-gaspillage incliné, permet de minimiser les pertes d'eau dues au lapement par les animaux tout en facilitant le nettoyage et la vidange de la cuve. De plus, le retour extérieur présent dans certains modes de réalisation permet de fixer facilement la cuve selon l'invention sur un support destiné à être apposé au sol et de protéger ledit support contre le grignotage par les animaux.

D'autres caractéristiques et avantages de l'invention ressortiront de la description détaillée qui va suivre, des modes de réalisation non limitatifs de l'invention, en référence aux figures annexées dans lesquelles :
- la figure 1 représente une vue en coupe d'une cuve selon la présente invention
- la figure 2 représente un détail essentiel de la cuve de la fig. 1
- la figure 3 représente la cuve de la fig. 1 montée sur un abreuvoir basculant
- la figure 4 représente la cuve de la fig. 1 montée sur une embase

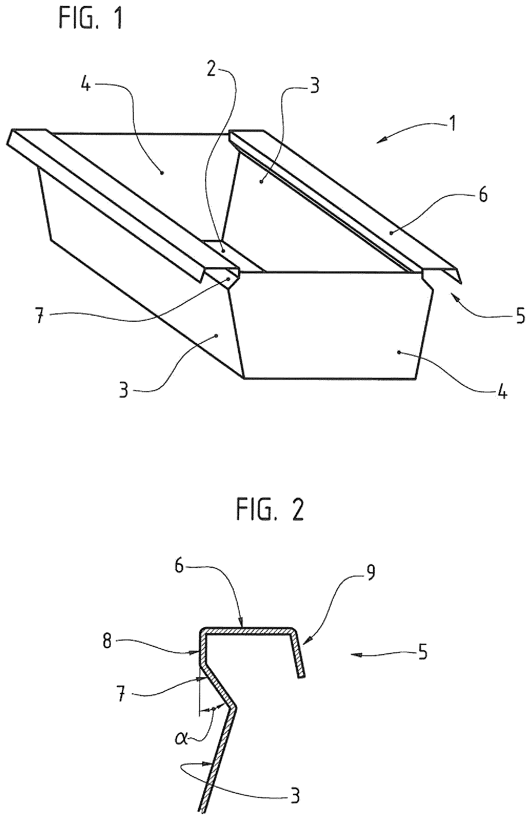

La cuve monobloc 1 comporte un fond 2. De préférence, ledit fond 2 est sensiblement horizontal. Plus préférentiellement encore, et comme l'illustre la figure 1, ledit fond 2 de la cuve 1 présente une forme rectangulaire, qui est la forme la mieux adaptée pour un abreuvoir collectif, destiné à permettre à plusieurs animaux de se ravitailler en même temps. On peut aussi prévoir un fond incliné d'un bout de l'abreuvoir à l'autre.

Le fond 2 de la cuve 1 est surmonté par au moins deux parois latérales 3. Ces dernières peuvent être sensiblement verticales et de ce fait perpendiculaires au fond 2 de la cuve 1.

Cependant, selon un mode de réalisation avantageux présenté sur la figure 1, les parois latérales 3 peuvent également présenter une inclinaison vers l'extérieur de la cuve monobloc 1 de manière à ce que ladite cuve 1 présente une forme sensiblement évasée. Une telle inclinaison des parois latérales 3 facilite notamment l'accès des animaux à l'eau de l'abreuvoir.

Au niveau de leur extrémité supérieure, en d'autres termes l'extrémité qui n'est pas en contact avec le fond 2 de la cuve monobloc 1, au moins une des parois latérales 3 présente un moyen de fixation 5 de la cuve 1 sur un support.

A ce propos, une seule des deux parois latérales peut présenter un tel moyen de fixation 5, par exemple dans le cas où l'abreuvoir comportant la cuve 1 est destiné à être fixée sur l'un des murs d'une stabulation.

Cependant plus souvent les deux parois latérales 3 comportent un moyen de fixation 5 sur un support, lorsque l'abreuvoir n'est pas fixé à un mur mais posé sur le sol. Dans ce cas, les animaux peuvent alors avoir accès à la cuve 1 par les deux côtés de l'abreuvoir.

Selon l'invention, un tel moyen de fixation 5 comprend une face horizontale 6 sensiblement plane et horizontale permettant de poser la cuve 1 sur un support quelconque.

De façon particulièrement avantageuse, le moyen de fixation 5 de la cuve monobloc 1 comporte également un retour extérieur 9.

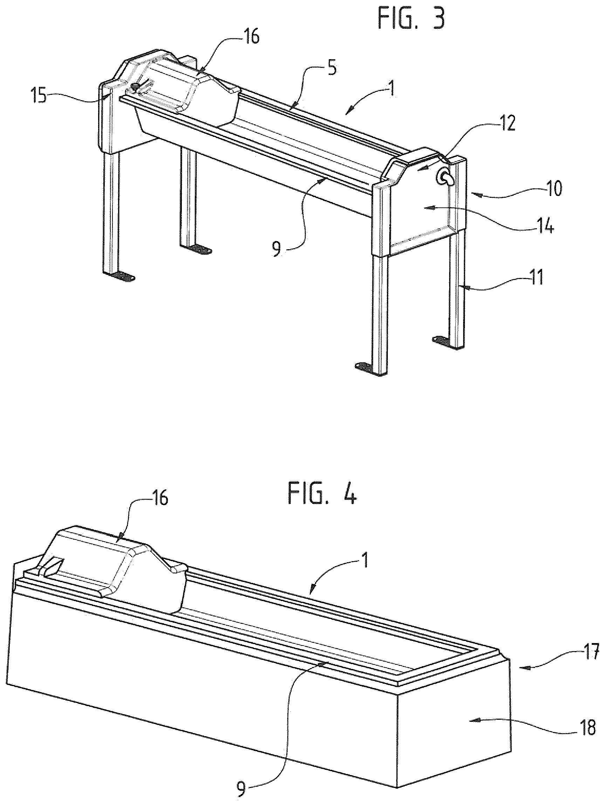

Tel qu'illustré sur la figure 4, un tel retour 9 permet d'une part d'optimiser la fixation de la cuve 1 sur un support et d'autre part d'éviter que les animaux grignotent ledit support, qui peut par exemple être fabriqué en une matière plastique (protection « anti-grignotage »). Enfin un tel retour extérieur 9 permet de ne pas exposer de partie coupée, et donc coupante, de la tôle servant à fabriquer la cuve monobloc 1 qui pourrait blesser les animaux venant se désaltérer.

Selon un mode de réalisation avantageux, un tel retour extérieur 9 présente une inclinaison selon un angle optimal compris entre 30° et 90° par rapport au plan de la face horizontale 6 du moyen de fixation 5. Plus préférentiellement, l'angle est compris entre 45° et 75°.

La cuve 1 selon la présente invention comporte également un moyen anti-gaspillage 7 dans le prolongement des parois latérales 3.

Selon l'invention, un tel moyen anti-gaspillage 7 consiste en une face plane et inclinée vers l'intérieur de la cuve en montant, comme illustré sur la figure 2. L'inclinaison par rapport à la verticale présente un angle a, avantageusement compris entre 30° et 80° et plus avantageusement encore compris entre 45 et 75°. Une telle inclinaison est en effet optimale pour éviter les pertes d'eau ainsi que pour faciliter l'entretien de la cuve 1.

La présence de ce moyen anti-gaspillage 7 confère de nombreux avantages à la cuve monobloc 1 selon l'invention. Il permet notamment de faire en sorte que les projections d'eau, qui tendent à sortir de ladite cuve 1 sous l'action des coups de langue des animaux, sont guidées par ledit moyen anti-gaspillage 7 vers le centre de la cuve, de manière à retomber dans ladite cuve 1. De plus, étant donné que le présent moyen anti-gaspillage 7 est incliné, et non pas horizontal rentrant comme dans l'état de la technique, il permet d'éviter aux particules solides, que peuvent charrier les animaux lorsqu'ils s'abreuvent, de se coincer entre le moyen anti-gaspillage 7 et la paroi latérale 3. Cela facilite nettement la vidange de la cuve 1 ainsi que son nettoyage, notamment lorsque la cuve est destinée à être montée sur un abreuvoir dont la vidange s'effectue par basculement.

Selon un exemple de réalisation illustré sur la figure 2, le moyen de fixation 5 comporte également, dans le prolongement du moyen anti-gaspillage 7, une face verticale 8 sensiblement plane et verticale. Avantageusement, ladite face verticale 8 est sensiblement perpendiculaire par rapport à la face horizontale 6 du moyen de fixation 5 de la cuve monobloc 1. Une telle face verticale 8 présente l'avantage, d'une part, de faciliter le pliage ou la soudure du moyen de fixation 5 et d'autre part de décaler le moyen anti-gaspillage 7 vers le bas par rapport au bord supérieur de la cuve.

Une telle cuve monobloc 1 peut être obtenue par un pliage réalisé directement sur le matériau dans lequel on veut obtenir la cuve 1. Préférentiellement, un tel matériau peut consister en de l'acier inoxydable. Elle est ensuite complétée par le soudage des parois avant et arrière 4, pour fermer la cuve 1.

Cependant, un tel mode de réalisation n'est pas limitatif. En effet, on peut également imaginer que la cuve monobloc 1 soit obtenue en soudant les différentes pièces de ladite cuve 1, en particulier le fond 2, les parois latérales 3, les parois avant et arrière 4 ainsi que le moyen de fixation 5 et/ou anti-gaspillage 7 sur au moins une des deux dites parois 3.

Selon l'invention l'ensemble moyen anti-gaspillage 7 et moyen de fixation 5 sera réalisable par pliage d'une tôle, en particulier l'extrémité supérieure des parois 3. L'invention propose ici une forme réalisable par pliage, c'est-à-dire que même si elle est fabriquée autrement, on pourrait déplier la tôle, et obtenir une tôle plane.

La réalisation de cet ensemble par pliage, présente l'avantage d'éviter l'utilisation d'organes d'assemblage, telles que des vis ou des boulons, pour fixer ensemble les pièces constituant ladite cuve 1. En effet, la résistance d'un tel assemblage pourrait s'avérer insuffisante pour une utilisation destinée aux gros animaux d'élevage, en particulier les bovins, qui peuvent être brusques et, de ce fait, rapidement le dégrader, les vis ou boulons pouvant se desserrer.

Telle que représentée sur les figures 3 et 4, la cuve monobloc 1 est destinée à former la cuve d'un abreuvoir 10, 17 permettant aux animaux, en particulier de type bovins, ovins ou analogues, de venir s'abreuver.

Selon un exemple de réalisation illustré sur la figure 3, la cuve 1 est montée sur un abreuvoir de type à basculement 10.

Un tel type d'abreuvoir à basculement 10 est avantageusement monté sur quatre pieds 11 qui reposent sur le sol. Cependant, un tel mode de réalisation n'est pas limitatif. En effet, un tel abreuvoir à basculement peut également être fixé à un mur ou à une barrière (non représentés).

Sur un abreuvoir à basculement 10 tel que représenté aux figures 1 et 3, la cuve monobloc 1 contenant l'eau est préférentiellement montée sur un axe rotatif 12 supporté par des flasques d'extrémité 4.

De plus, un tel abreuvoir à basculement 10 comporte avantageusement des moyens aptes à faire basculer la cuve monobloc 1 autour de l'axe de rotation 12, de manière à permettre aisément la vidange de ladite cuve 1 ainsi que son nettoyage. Il comprend de préférence un moyen de blocage en basculement de la cuve pour éviter son basculement intempestif.

Préférentiellement, et comme on peut le voir sur la figure 3, ledit abreuvoir peut également comporter une extrémité avant 14 et une extrémité arrière 15, et des moyens d'alimentation 16 aptes à remplir la cuve monobloc 1 avec de l'eau.

Selon encore un autre mode de réalisation particulier, représenté sur la figure 4, la cuve monobloc 1 peut être fixée, toujours grâce aux moyens de fixation 5, sur une embase 18 destinée à être posée sur le sol. L'abreuvoir 17 ainsi obtenu est appelé abreuvoir à embase.

Une telle embase 18 est préférentiellement fabriquée en polyéthylène. Dans ce cas précis, le retour extérieur 9 de la cuve monobloc 1 permet, outre la fixation de la dite cuve 1 sur l'embase 17, de protéger cette dernière contre le grignotage de la structure par les animaux.

L'abreuvoir à embase 17 comporte également avantageusement des moyens d'alimentation 16 aptes à remplir la cuve 1 d'eau.

Bien entendu, l'invention n'est pas limitée aux exemples illustrés et décrits précédemment ; des variantes et modifications peuvent y être apportées sans pour autant sortir du cadre de l'invention, telle que revendiquée dans les revendications suivantes.

## Revendications

1. Cuve monobloc (1) pour un abreuvoir, ladite cuve (1) comprenant un fond (2), surmonté d'au moins deux parois latérales (3) dont l'une des deux au moins présente au niveau de son extrémité supérieure un moyen de fixation (5) sur un support, ledit moyen de fixation comportant une face horizontale (6) sensiblement plane et horizontale, **caractérisée en ce que** l'une des deux parois (3) au moins présente, dans le prolongement de son extrémité supérieure, un moyen anti-gaspillage (7) consistant en une face plane inclinée vers l'intérieur de la cuve (1) en montant d'un angle α par rapport à la verticale, **en ce que** ledit moyen de fixation (5) sur un support s'étend dans le prolongement dudit moyen anti-gaspillage (7), et **en ce que** ledit moyen de fixation (5) et ledit moyen anti-gaspillage (7) sont configurés de sorte à pouvoir être obtenus par pliage d'une tôle.

2. Cuve monobloc (1) selon la revendication précédente, dans laquelle l'angle d'inclinaison (a) du moyen anti-gaspillage (7) par rapport à la verticale est compris entre 30° et 85°, de préférence entre 45° et 75°.

3. Cuve monobloc (1) selon l'une des revendications précédentes, dans laquelle le moyen de fixation (5) comporte un retour extérieur (9).

4. Cuve monobloc (1) selon la revendication précédente dans laquelle ledit retour extérieur (9) présente une inclinaison selon un angle compris entre 30° et 90°, de préférence entre 45° et 75°, par rapport au plan de ladite face horizontale (6).

5. Abreuvoir, de type abreuvoir à basculement (10), incorporant une cuve monobloc (1) selon l'une quelconque des revendications 1 à 4.

6. Abreuvoir, de type abreuvoir à embase (17), incorporant une cuve monobloc (1) selon l'une quelconque des revendications 1 à 4.

7. Utilisation d'une cuve monobloc (1) selon l'une quelconque des revendications 1 à 4, pour fabriquer un abreuvoir collectif ou monoposte.

## Patentansprüche

1. Einteiliges Becken (1) für eine Tränke, wobei das Becken (1) einen Boden (2) umfasst, der von mindestens zwei seitlichen Wänden (3) überragt wird, wobei eine der mindestens zwei auf dem Niveau ihres oberen Endes ein Mittel zur Befestigung (5) auf einem Träger aufweist, wobei das Mittel zur Befestigung eine horizontale Seite (6) umfasst, die im Wesentlichen eben und horizontal ist, **dadurch gekennzeichnet, dass** eine der mindestens zwei Wände (3) in der Verlängerung ihres oberen Endes ein Mittel gegen die Verschwendung (7) aufweist, das aus einer ebenen Seite besteht, die hin zur Innenseite des Beckens (1) geneigt ist, indem sie um einen Winkel α mit Bezug auf die Vertikale ansteigt, dadurch, dass sich das Mittel zur Befestigung (5) auf einem Träger in der Verlängerung des Mittels gegen die Verschwendung (7) erstreckt, und dadurch, dass das Mittel zur Befestigung (5) und das Mittel gegen die Verschwendung (7) derart konfiguriert sind, dass sie durch das Falten eines Blechs erhalten werden können.

2. Einteiliges Becken (1) nach dem vorhergehenden Anspruch, wobei der Neigungswinkel (a) des Mittels gegen die Verschwendung (7) mit Bezug auf die Vertikale im Bereich zwischen 30° und 85°, vorzugsweise 45° und 75° liegt.

3. Einteiliges Becken (1) nach einem der vorhergehenden Ansprüche, wobei das Mittel zur Befestigung (5) einen äußeren Rücklauf (9) umfasst.

4. Einteiliges Becken (1) nach dem vorhergehenden Anspruch, wobei der äußere Rücklauf (9) eine Neigung gemäß einem Winkel aufweist, der im Bereich zwischen 30° und 90°, vorzugsweise zwischen 45° und 75° mit Bezug auf die Ebene der horizontalen Seite (6) liegt.

5. Tränke vom Typ Tränke mit Kippen (10), umfassend ein einteiliges Becken (1) nach einem beliebigen der Ansprüche 1 bis 4.

6. Tränke vom Typ Tränke mit Sockel (17), umfassend ein einteiliges Becken (1) nach einem beliebigen der Ansprüche 1 bis 4.

7. Verwendung eines einteiligen Beckens (1) nach einem beliebigen der Ansprüche 1 bis 4, um eine kollektive oder Einzeltränke herzustellen.

## Claims

1. A single-piece tank (1) for a drinking trough, said tank (1) comprising a bottom (2), topped by at least two side walls (3), at least one of the two of which has, at its upper end, a fastening means (5) on a support, said fastening means including a substantially planar and horizontal face (6), **characterized in that** at least one of the two walls (3) has, in the extension of its upper end, a waste prevention means (7) consisting of a planar face tilted toward the inside of the tank (1) rising by an angle α relative to the vertical, **in that** said fastening means (5) on a support extends in the extension of said waste prevention means (7), and **in that** said fastening means (5) and said waste prevention means (7) are configured so as to be able to be obtained by bending a metal sheet.

2. The single-piece tank (1) according to the preceding claim, wherein the tilt angle (a) of the waste prevention means (7) relative to the vertical is between 30° and 85°, preferably between 45° and 75°.

3. The single-piece tank (1) according to one of the preceding claims, wherein the fastening means (5) includes an outer return (9).

4. The single-piece tank (1) according to the preceding claim, wherein said outer return (9) has a tilt with an angle between 30° and 90°, preferably between 45° and 75°, relative to the plane of said horizontal face (6).

5. A drinking trough, of the tilting drinking trough type (10), incorporating a single-piece tank (1) according to any one of claims 1 to 4.

6. A drinking trough, of the trough with base type (17), incorporating a single-piece tank (1) according to any one of claims 1 to 4.

7. A use of a single-piece tank (1) according to any one of claims 1 to 4, to manufacture a collective or single-station drinking trough.
